Europäisches Patentamt

European Patent Office

Office européen des brevets

(19)

(11) Publication number : **0 497 742 A1**

## (12) EUROPEAN PATENT APPLICATION

(21) Application number : 92830022.7

(22) Date of filing : 21.01.92

(51) Int. Cl.$^5$ : **G01D 5/26**

Priority document no. TO91A000046.

(30) Priority : **25.01.91**

(43) Date of publication of application :
**05.08.92 Bulletin 92/32**

(84) Designated Contracting States :
**CH DE ES FR GB IT LI SE**

(71) Applicant : **Van Lamsweerde, Edoardo**
**Via Lorenteggio 39**
**I-20146 Milano (IT)**
(71) Applicant : **PRIMA INDUSTRIE S.p.A.**
**Via Antonelli 32**
**I-10097 Regina Margherita di Collegno**
**(Torino) (IT)**

(72) Inventor : **Van Lamsweerde, Edoardo**
**39a Lorenteggio 39**
**I-20146 Milano (IT)**

(74) Representative : **Saconney, Piero et al**
**c/o JACOBACCI-CASETTA & PERANI S.p.A.**
**Via Alfieri, 17**
**I-10121 Torino (IT)**

(54) **A graduated element for optical reading by reflection and a method for its manufacture.**

(57) The graduated element includes a rigid substrate (1) with a background surface (2) with low light absorption on which there are raised graphic markings, such as micrometric graduations (6), which contrast with the background surface (2). The graphic markings (6) are produced by the deposition of a micrometric layer of a material with high light absorption. The background surface (2) is preferably constituted by a layer of a reflective metal, such as aluminium. The reflective layer (2) is also preferably covered by a transparent, micrometric coating such as silicon dioxide. Again preferably, the graphic markings (6) are constituted by chromium or a chromium-based composition. In the method according to the invention, the graphic markings (6) are produced photochemically. The various layers (2, 3, 6) are preferably applied to the substrate (1) in succession by vacuum evaporation.

FIG. 7

EP 0 497 742 A1

Jouve, 18, rue Saint-Denis, 75001 PARIS

The present invention relates to a graduated element for optical reading by reflection according to the preamble of Claim 1, as well as to a method according to the preamble of Claim 14 for the manufacture of the graduated element.

The invention has been developed for application to graduated elements in the form of linear measuring rules with substrates constituted by rigid strips but its application extends to any type of graduated element carrying graphic markings such as micrometric graduations arranged, inter alia, in a circle or along an arc of a circle, on a substrate in the form of a disc, a circular segment, or the like.

At the moment, incremental measurement systems of various types, including interferometric systems with laser beams, inductive and/or capacitive systems, and photoelectrical systems with optical rulings, are used for measuring linear quantities with rigorous precision and accuracy at a micrometric level. Compared with other systems, the photoelectric systems with optical rulings have found most favour, particularly in the machine-tools and general machinery sectors.

In a photoelectric system with optical rulings, the graduated element with which the photoelectric transducer cooperates normally consists of a linear measurement rule the substrate of which is constituted by a rigid strip of metal or glass with micrometric notches engraved at equal spacings on one of the surfaces of the strip and oriented perpendicular to the longitudinal axis thereof. The notches enable the generation of optical pulses which are converted into electrical signals by photodiodes, by means of a reading cursor with a head including a corresponding series of notches.

Currently, there are various known methods of producing the graduated elements in question. In applications which do not require very great precision, the notches are spaced at intervals of 20 µm with 10 µm notches and 10 µm spaces. In order to provide a homogeneous and complete signal at the output of the transducer, it is essential that the notches are precise and equally perfect. The quality of the notches depends exclusively on the quality of the method used to form them.

The present invention relates to graduated measurement elements of the reflection type, and techniques relating to the production of similar graduated elements of the refraction type which have substrates of glass or equivalent transparent materials will not therefore be considered.

A graduated element according to the prior art which is the closest to that outlined in the preamble of Claim 1 includes a substrate in the form of a strip of stainless steel alloyed with chromium having a mirror surface and generally being between 0.05 mm and 0.5 mm thick and between 5 mm and 15 mm wide. Each graduated element is produced from a continuous strip, the length of which may even reach 30-40 m.

The mirror surface of the strip is normally made reflective by means of gilt in which the notches forming the graphic markings of the graduated element are engraved.

According to a typical method known as the photo-engraving method, which corresponds to the introduction to Claim 14, the mirror surface of the steel strip, which is polished beforehand, is covered by a layer of photosensitive resin which is then dried. A "positive" mask with slots of dimensions corresponding to those of the notches to be engraved is then applied to the dried photosensitive layer. The photosensitive layer is then illuminated by ultraviolet rays as a result of which the photosensitive resin exposed through the slots becomes soluble. The photosensitive resin is then treated with a solvent which dissolves it in the regions exposed, to form notches which reveal the underlying steel substrate in these regions. This operation is followed by treatment with a solution based on acidic agents such as hydrochloric acid and ferric chloride resulting in the chemical engraving of the notches in the steel surface. Finally, the residual resin is removed from the strip by a suitable solvent. As a result, a steel strip with chemically engraved notches is produced.

According to another known photo-engraving method, a "negative" mask with dark portions instead of slots is used, that is a mask which enables the photosensitive resin to be sensitised in the regions which are not covered by the dark portions. A subsequent development step removes the exposed resin, leaving the notch regions covered with resin. The strip thus prepared undergoes a galvanic gilding process which covers the surface of the strip which is without resin with a very thin layer of gold. Washing with a suitable solvent removes the remaining resin, revealing the notch regions which are then engraved by acidic agents as in the method described above. The final result is a gilded steel strip with chemically engraved notches.

The notches produced by the chemical engraving methods described above are not always perfect and precise. This problem is due to the fact that the composition of the steel alloys used to produce the strips is often not uniform so that the metallic surface cannot be engraved evenly. In this case, when viewed under a microscope, both the bottoms and the edges of the notches are uneven, indented or serrated. As a result, the graduated element produced provides incomplete electrical signals at the output of the transducer.

The object of the present invention is to prevent this problem by the provision of a graduated element with graduations or other graphic markings which are defined by well-delineated outlines, of a quality which is comparable, as regards precision, to the notches which can be produced in a glass substrate.

According to the present invention, this problem is solved by a graduated element and a method as claimed.

A graduated element produced according to the invention has raised, opaque, and preferably dark graduations or other graphic markings which stand out against a bright and preferably reflective background.

As it has been found in practice, a graduated element formed according to the invention enables a transducer to produce electrical signals which are much more uniform than those obtainable from graduated elements according to the prior art. This seems to be due to the fact that the relief graduations can be produced with outlines and upper surfaces which are more uniform than the edges and bottoms of the notches according to the prior art.

Further characteristics and advantages of the invention will become clear from the detailed description which follows with reference to the appended drawings, given by way of non-limiting example, in which:

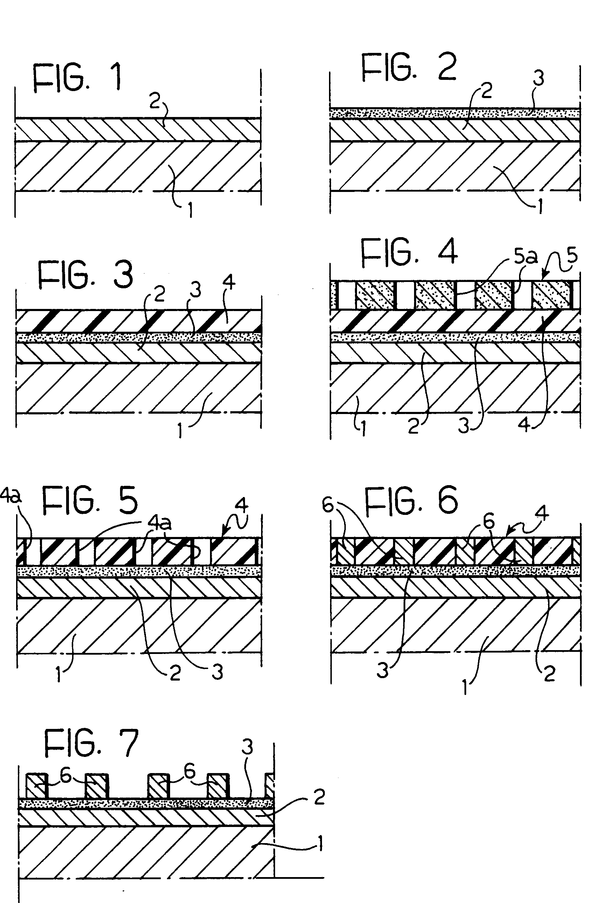

Figures 1 to 7 are partial, schematic sections of a graduated element, with exaggerated and altered proportions, undergoing the various steps of a method according to a preferred embodiment of the invention.

Figure 1 shows a rigid substrate, indicated 1, preferably constituted by a strip of austenitic stainless steel-chromium alloy. A nominal and preferred chemical composition of the substrate 1 is as follows: chromium: 17%, carbon: 0.09%, manganese: 1.3%, nickel: 8%, silicon: 1.2%, molybdenum: 0.7%

The preferred dimensions of the substrate 1 are a thickness of 0. 5 mm and a width of 15 mm. The operations are carried out on a strip which may be as much as 30-40m long and which will then be cut into portions to form the individual graduated elements.

The substrate 1 thus has a surface with low light absorption. For this purpose, the substrate 1 is preferably polished beforehand by usual methods and is then inserted in a first hard-vacuum machine in which one of its surfaces is exposed to sublimed metallic aluminium vapour according to known techniques, so that, upon completion, it is coated by a micrometric layer 2 preferably about 1 $\mu$m thick.

The aluminium layer 2 has the function of making the substrate 1 bright and very reflective by virtue of the very good reflective properties of this metal.

With reference to Figure 2, the strip comprising the substrate 1 and the aluminium coating 2 preferably passes into a second hard-vacuum machine in which, again according to known techniques, a micrometric, transparent, protective layer 3, preferably of silicon dioxide ($SiO_2$), is superposed on the aluminium layer. The preferred thickness of the layer 3 is about 0.1 $\mu$m.

Aluminium is a fairly soft metal and the purpose of the silicon dioxide coating is to give it a protective coating of a hard material to protect it from abrasion.

With reference to Figure 3, the strip coated as in Figure 2 is covered by a layer of photosensitive resin 4 of a type available on the market, with the use of known methods. Conveniently, the photosensitive resin "Microposit S1400" produced by the firm SHYPLY may be used. The resin layer 4 is dried before the next step is effected.

With reference to Figure 4, a "positive" mask or stencil 5 with micrometric slots 5a having the shapes and dimensions of the graphic markings, such as micrometric graduations, to be produced on the strip 1, is superposed on the resin layer 4.

By way of example, the slots 5a may be 10 $\mu$m wide, alternating with spaces, also 10 $\mu$m wide.

The unit shown in Figure 4 is exposed to the rays from an ultraviolet lamp. The exposure is preferably carried out by advancing the strip gradually relative to the mask 5 in steps equal to the length of the mask.

The resin of the layer 4 is thus exposed in correspondence with the slots 5a where it becomes soluble in a developer.

With reference to Figure 5, the exposed resin of the layer 4 is treated with a developer recommended by the producers of the photosensitive resin. Slots 4a corresponding to the slots 5a in the mask 5 are thus formed in the resin layer 4, revealing the underlying silicon dioxide layer 3.

With reference to Figure 6, the strip prepared as in Figure 5 is introduced into a third hard-vacuum machine in which, again according to known sublimation techniques, a micrometric layer of a metallic composition of a dark colour is deposited on the surface of the silicon dioxide revealed in the bottoms of the notches 4a, as indicated at 6. The composition is preferably constituted by chromium or a chromium-based composition such as metallic chromium and titanium dioxide ($TiO_2$). A preferred thickness of the deposits 6 is about 0.1 $\mu$m.

With reference to Figure 7, the composite strip of Figure 6 is treated with a suitable solvent, generally acetone, which dissolves all the resin of the layer 4 which was not exposed during the step of Figure 4, thus revealing again the transparent layer 3 between the raised portions 6 which constitute the graduations or other graphic markings.

The strip thus prepared therefore has dark micrometric graduations 6 or other graduation markings on a bright and highly reflective surface 2 which is protected against abrasion by the hard and transparent layer 3.

The strip produced is then cut into portions or rules for use in optical reflection transducers.

It has been found that the outlines and surfaces of the graduations such as those indicated 6 or other graphic markings on these rules are always well delineated and uniform and the rule provides very precise optical readings producing regular and uniform electrical signals at the output of a transducer.

According to the invention, curved graduations for optical readings with graphic markings in relief arranged, for example, in a circle or along an arc of a circle, may be produced by techniques similar to that described above.

## Claims

1. A graduated element for optical reading by reflection, including a rigid substrate (1) with a background surface (2) with low light absorption on which there are graphic markings such as micrometric graduations (6) which contrast with the background surface (2) so as to be detected by an electro-optical reading system, characterised in that the graphic markings (6) are constituted by a micrometric layer of a material with high light absorption deposited on the background surface (2).

2. A graduated element according to Claim 1, characterised in that the background surface (2) of the substrate (1) is of a reflective metal.

3. A graduated element according to Claim 2, characterised in that the reflective metal of the background surface (2) is aluminium.

4. A graduated element according to Claim 2 or Claim 3, characterised in that the background surface of reflective metal is constituted by a micrometric layer (2) of the metal.

5. A graduated element according to Claim 4, characterised in that the substrate (1) is of steel.

6. A graduated element according to any one of the preceding claims, characterised in that the graphic markings (6) are constituted by a metal or a metallic composition of a dark colour.

7. A graduated element according to Claim 6, characterised in that the graphic markings (6) are constituted by chromium or a chromium-based composition.

8. A graduated element according to Claim 7, characterised in that the composition forming the graphic markings (6) contains chromium and titanium dioxide.

9. A graduated element according to any one of the preceding claims, characterised in that a micrometric, transparent, protective layer (3) is deposited on the background surface (2) and the graphic markings (6) are deposited in turn on the micrometric, transparent, protective layer.

10. A graduated element according to Claim 9, characterised in that the transparent, protective layer (3) is of silicon dioxide.

11. A graduated element according to any one of the preceding claims, characterised in that at least one of the micrometric layers (2, 3, 6) mentioned above is deposited by vacuum evaporation.

12. A graduated element according to any one of the preceding claims, characterised in that the substrate (1) is in the form of a rectilinear strip.

13. A graduated element according to any one of Claims 1 to 11, characterised in that it has a curved scale and its substrate is in the form of a disc, a circular segment, or the like.

14. A method of manufacturing a graduated element for optical reading by reflection, of the type in which a removable photosensitive layer (4) is applied to a rigid substrate (1) with a background surface (2) with low light absorption, holes (4a) are formed in the layer (4) by photochemical means, according to a pattern of graphic markings such as graduations, in order to form on the substrate (1) corresponding graphic markings (6) which can be detected by an electro-optical reading system and, finally, the photosensitive layer (4) is removed, characterised in that the photosensitive layer (4) is formed by a material which can be removed by being dissolved, a micrometric layer (6) of a material with- high light absorption being deposited on the photosensitive layer (4) and in the holes (4a) therein in order to form the graphic markings (6), and the remaining photosensitive material (4) finally being removed by means of a solvent so that the portions of the micrometric layer which were deposited in the holes remain in relief on the background surface of the substrate to constitute graphic markings (6).

15. A method according to Claim 14, characterised in that, before the photosensitive layer (4) is applied, a micrometric layer of a reflective metal (2) is applied to the rigid substrate (1) to form the background surface.

16. A method according to Claim 15, characterised in that aluminium is used as the reflective metal.

17. A method according to Claim 15 or Claim 16, characterised in that a rigid substrate (1) of steel is used.

**18.** A method according to any one of Claims 14 to 15, characterised in that a micrometric metallic layer of a dark colour is deposited on the photosensisitve layer (4) and in the holes (4a) therein to form the graphic markings (6).

**19.** A method according to Claim 18, characterised in that chromium or a chromium-based composition is used to form the dark-coloured metallic layer (6).

**20.** A method according to Claim 19, characterised in that a composition including chromium and titanium dioxide is used to form the dark-coloured layer (6).

**21.** A method according to any one of Claims 14 to 20, characterised in that, before the photosensitive layer (4) is applied, a micrometric, transparent, protective layer (3) is deposited on the background surface (2), the layer constituting the graphic markings (6) subsequently being deposited thereon through the holes (4a) in the photosensitive layer.

**22.** A method according to Claim 21, characterised in that silicon dioxide is used to form the transparent, protective layer (3).

**23.** A method according to any one of the preceding claims, characterised in that at least one of the micrometric layers (2, 3, 6) mentioned above is deposited by vacuum evaporation.

FIG. 1

FIG. 2

FIG. 3

FIG. 4

FIG. 5

FIG. 6

FIG. 7

**European Patent Office**

# EUROPEAN SEARCH REPORT

Application Number

EP 92 83 0022

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN<br>vol. 10, no. 206 (P-2262)18 July 1986<br>& JP-A-61 045 923 ( ARONSHIYA K.K. ) 6 March 1986 | 1-4,<br>13-16,18 | G01D5/26 |
| Y | * abstract * | 5,17 | |
| X | US-A-4 644 156 (TAKAHASHI ET AL.)<br>* column 2, line 30 - line 66; figures 4,5 * | 1,13,14 | |
| Y | DE-C-3 924 154 (DR. JOHANNES HEIDENHAIN GMBH)<br>* column 2, line 38 * | 5,17 | |
| A | PATENT ABSTRACTS OF JAPAN<br>vol. 7, no. 168 (P-212)(1313) 23 July 1983<br>& JP-A-58 075 004 ( MITSUTOYO SEISAKUSHO K.K. ) 6 May 1983<br>* abstract * | 6-8,12,<br>19,20 | |
| A | US-A-3 521 961 (J.HEIDENHAIN ET AL.)<br>* column 2, line 16 * | 9,10,21,<br>22 | TECHNICAL FIELDS SEARCHED (Int. Cl.5) |
| A | TOOLING & PRODUCTION<br>vol. 54, no. 3, June 1988, SOLON,OH,USA<br>pages 49 - 51; 'Glass scale technology - an exercise in precision'<br>* page 50, middle column - page 51, left column * | 11,23 | G01D |

----

The present search report has been drawn up for all claims

| Place of search | Date of completion of the search | Examiner |
|---|---|---|
| THE HAGUE | 26 MAY 1992 | LUT K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)